(19)

Europäisches
Patentamt
European
Patent Office
Office européen
des brevets

(11) **EP 3 903 585 A1**

(12) **EUROPEAN PATENT APPLICATION**
published in accordance with Art. 153(4) EPC

(43) Date of publication:
**03.11.2021 Bulletin 2021/44**

(21) Application number: **19901922.5**

(22) Date of filing: **31.10.2019**

(51) Int Cl.:
*A01N 59/06* *(2006.01)*          *A01N 25/04* *(2006.01)*
*A01N 59/00* *(2006.01)*          *A01P 1/00* *(2006.01)*
*C09D 5/14* *(2006.01)*           *C09D 7/61* *(2018.01)*
*C09D 201/00* *(2006.01)*         *D06M 11/44* *(2006.01)*
*D06M 11/45* *(2006.01)*          *D06M 11/79* *(2006.01)*

(86) International application number:
**PCT/JP2019/042926**

(87) International publication number:
**WO 2020/137157 (02.07.2020 Gazette 2020/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.12.2018  JP 2018246041**

(71) Applicant: **Toagosei Co., Ltd.**
**Minato-ku**
**Tokyo 105-8419 (JP)**

(72) Inventors:
• **NIWA Megumi**
  **Nagoya-shi, Aichi 455-0026 (JP)**
• **YAMADA Yoshinao**
  **Nagoya-shi, Aichi 455-0026 (JP)**

(74) Representative: **TBK**
**Bavariaring 4-6**
**80336 München (DE)**

(54) **ANTI-NON-ENVELOPED VIRUS AGENT AND COMPOSITION CONTAINING SAME, AND ANTI-VIRAL PRODUCT AND METHOD FOR PRODUCING SAME**

(57)     An object of the present invention is to provide an antiviral agent suitable for inactivating a non-enveloped virus, a composition containing thereof, an antiviral product, and a method for producing the same. The antiviral agent against a non-enveloped virus includes at least one selected from a group consisting of (A) a compound containing A1 element, Mg element, and O element; (B) a compound containing an alkali metal element or an alkaline earth metal element, Si element, and O element; and (C) a hydroxide containing a divalent metal element.

EP 3 903 585 A1

**Description**

TECHNICAL FIELD

The present invention relates to an antiviral agent suitable for inactivating a non-enveloped virus, a composition containing thereof, an antiviral product, and a method for producing the same.

BACKGROUND ART

Viral diseases caused by influenza virus, norovirus, etc. have become a big problem all over the world, and a high level of hygiene awareness has been gained in daily life.

Viruses are structurally generally divided into two types according to the presence or absence of an envelope. The influenza virus is an enveloped virus with an envelope, and the norovirus is a non-enveloped virus without an envelope.

Conventionally, in order to inactivate a virus, a method of killing the virus by heat treatment, treatment with an organic solvent such as ethanol, treatment with a surfactant, or the like is generally known. These methods are known as inactivation treatments that are particularly effective against an enveloped virus. However, the non-enveloped virus has resistance to the above-mentioned treatment, and the same effect as that on the enveloped virus cannot be expected.

Thus, development of an antiviral agent that inactivates the non-enveloped virus has been actively promoted in recent years.

Patent Literature 1 discloses a complex containing a fiber and a hydrotalcite, represented by $[M^{2+}_{1-x}M^{3+}_x(OH)_2]$ $[A^{n-}_{x/n} \cdot mH_2O]$ (in the formula, $M^{2+}$ represents a divalent metal ion, $M^{3+}$ represents a trivalent metal ion, and $A^{n-}_{x/n}$ represents an interlayer anion, $0<x<1$ is defined, n is the valence number of A, and $0 \le m<1$ is defined), and a process for preparing the complex and describes that the complex has low antiviral properties, so that the performance is improved when the complex is treated with a copper thiosulfato solution.

Patent Literature 2 discloses an antiviral film that includes a silicon-containing compound (siloxane compound, etc.) and having a film surface pH of 6 or less.

Patent Literature 3 discloses an antiviral composition that includes silver and a polyalkylene biguanide compound having a specific structure and/or a salt thereof.

PRIOR TECHNICAL ART

PATENT LITERATURE

Patent Literature 1: WO 2018/30521
Patent Literature 2: WO 2017/86098
Patent Literature 3: JP 2015-78132 A

SUMMARY OF INVENTION

TECHNICAL PROBLEMS

An object of the present invention is to provide an antiviral agent suitable for inactivating a non-enveloped virus, a composition containing thereof, an antiviral product, and a method for producing the same.

SOLUTIONS TO PROBLEMS

The present invention is as follows.

[1] An antiviral agent against a non-enveloped virus, including at least one selected from a group consisting of:

(A) a compound containing A1 element, Mg element, and O element;
(B) a compound containing an alkali metal element or an alkaline earth metal element, Si element, and O element; and
(C) a hydroxide containing a divalent metal element.

[2] The antiviral agent against a non-enveloped virus according to [1] above, wherein the compound (A) is a compound represented by a following formula (1).

$$Mg_xAl_yO_{(x+1.5y)} \qquad (1)$$

(In the formula, x and y are integers.)

[3] The antiviral agent against a non-enveloped virus according to [1] or [2] above, wherein the compound (B) is a silicate.

[4] The antiviral agent against a non-enveloped virus according to any one of [1] to [3] above, wherein the hydroxide (C) is a compound containing an alkaline earth metal element.

[5] An antiviral product including the antiviral agent against a non-enveloped virus according to any one of [1] to [4] above.

[6] A coating composition including the antiviral agent against a non-enveloped virus according to any one of [1] to [4] above and an adhesive resin.

[7] A production method of an antiviral product, including:

a step in which the coating composition according to [6] above and a base material are used to form a coat on a surface of the base material, and

a step in which the coat is dried.

ADVANTAGEOUS EFFECTS OF INVENTION

The antiviral agent against a non-enveloped virus, the composition containing thereof, and the antiviral product in embodiments according to the present invention are suitable for inactivating a non-enveloped virus.

DESCRIPTION OF EMBODIMENT

The antiviral agent against a non-enveloped virus of an embodiment according to the present invention includes at least one selected from a group consisting of (A) a compound containing Al element, Mg element, and O element; (B) a compound containing an alkali metal element or an alkaline earth metal element, Si element, and O element; and (C) a hydroxide containing a divalent metal element. The hydroxide (C) is a compound that does not contain a trivalent metal element and Si element.

The antiviral agent against a non-enveloped virus in the embodiment according to the present invention may be one type of the compound (A), the compound (B), and the hydroxide (C), a combination of two types among these compounds, or a combination of three types.

Examples of the virus inactivated by the antiviral agent against a non-enveloped virus of the embodiment according to the present invention include norovirus, adenovirus, rotavirus, human papillomavirus, poliovirus, enterovirus, coxsackievirus, human parvovirus, encephalomyocarditis virus, poliovirus, rhinovirus, and the like.

The compound (A) is a compound containing A1 element, Mg element, and O element. This compound may be an oxide; a hydroxide; an inorganic acid salt such as a nitrate, a sulfate, and a phosphate; an organic acid salt such as an acetate; and a complex. Among these, an oxide and a hydroxide are preferable, and the oxide is particularly preferable.

Examples of the oxide include a compound represented by the following general formula (1).

$$Mg_xAl_yO_{(x+1.5y)} \qquad (1)$$

(In the formula, x and y are integers.)

In the general formula (1), a relationship between x and y is preferably x>y.

Examples of the hydroxide include a compound represented by the following general formula (2).

$$[M^{2+}_{1-p}M^{3+}_p(OH)_2]^{q+}[A^{n-}_{p/n}\cdot mH_2O]^{q-} \qquad (2)$$

(In the formula, $M^{2+}$ is a divalent metal ion, $M^{3+}$ is a trivalent metal ion, $A^{n-}_{p/n}$ is an interlayer anion, $0<p\leq0.33$ is satisfied, n is a valence number of A, and $0\leq m<1$ is satisfied.)

In the general formula (2), examples of $M^{2+}$ include $Mg^{2+}$ ion, $Ca^{2+}$ ion, $Ba^{2+}$ ion, and the like. Examples of $M^{3+}$ include $Fe^{3+}$ ion, $Al^{3+}$ ion, $La^{3+}$ ion, and the like.

The compound represented by the general formula (2) is preferably a compound in which $M^{2+}$ is an $Mg^{2+}$ ion and $M^{3+}$ is an $Al^{3+}$ ion.

The compound (B) is a compound containing an alkali metal element or an alkaline earth metal element, Si element, and O element. Examples of the alkali metal element include Li element, Na element, K element, Rb element, Cs element, Fr element, and the like. Among these, Na element is preferable.

The compound (B) is preferably a silicate, and more preferably a sodium silicate. Compounds represented by $Na_2SiO_3$, $Na_4SiO_4$, $Na_2Si_2O_5$, or $Na_2Si_4O_9$ are known as the sodium silicate, and $Na_2Si_2O_5$ is preferable among these.

The hydroxide (C) is a compound containing a divalent metal element. Examples of the divalent metal element include Group 2 elements in the periodic table (such as Be element, Ca element, Sr element, Ba element and Ra element), Cu element, Ni element, Co element, Zn element, Ge element, and the like. Among these, the alkaline earth metal element is preferable, and Ca element is particularly preferable.

The hydroxide (C) is preferably calcium hydroxide.

Although the antiviral agent against a non-enveloped virus of the embodiment according to the present invention may be used without changing its properties, the antiviral agent against a non-enveloped virus can be applied to a liquid agent (aerosol) prepared by dispersing the antiviral agent against a non-enveloped virus in a medium, and a coating composition to bond the antiviral agent against a non-enveloped virus by applying and drying the antiviral agent against a non-enveloped virus on a surface of a base material having a predetermined shape. A complex in which the antiviral agent against a non-enveloped virus is impregnated to the surface of the base material is an example of an antiviral product described later.

The antiviral agent against a non-enveloped virus of the embodiment according to the present invention may also be applied to a resin composition for molding process contained together with a resin or a precursor thereof. When a molding process for forming a predetermined shape is performed after that, a molded product containing the antiviral agent against a non-enveloped virus can be obtained. Such a molded product is an example of the antiviral product described later.

When the antiviral agent against a non-enveloped virus of the embodiment according to the present invention is applied to, as described above, a coating composition or a resin composition, the antiviral agent against a non-enveloped virus is preferably having a small particle size. The upper limit of the particle size is preferably 30 $\mu$m, and more preferably 10 $\mu$m. The lower limit thereof is preferably 50 nm, and more preferably 100 nm. The shape of the particle is not particularly limited.

The coating composition of the embodiment according to the present invention includes the antiviral agent against a non-enveloped virus and an adhesive resin. A medium of the coating composition may be water, an organic solvent, or a mixture thereof, but is preferably water or a mixture of water and a water-soluble organic solvent.

The adhesive resin contained in the coating composition of the embodiment according to the present invention may be singly or in combination of two or more types thereof.

The adhesive resin is appropriately selected depending on types of the medium. In a case where the medium is water or a mixture of water and a water-soluble organic solvent, the adhesive resin may be either a water-soluble resin or a water-insoluble resin.

Examples of the adhesive resin include an acrylic resin, an ethylene vinyl acetate copolymer or a modified polymer thereof (such as acid-modified polymer), an ethylene/vinyl chloride copolymer, a vinyl chloride/vinyl acetate copolymer, polyvinyl acetate, polyvinyl chloride, a modified olefin resin (such as chlorinated polyolefin), a polyester resin, a urethane resin, a styrene/butadiene copolymer, a styrene/isoprene copolymer, a styrene/butadiene/styrene block copolymer, a styrene/ethylene ▪ butylene/styrene block copolymer, a styrene/ethylene ▪ propylene/styrene block copolymer, a hydrogenated styrene/butadiene/styrene block copolymer, a hydrogenated styrene/ethylene ▪ butylene/styrene block copolymer, a hydrogenated styrene/ethylene ▪ propylene/styrene block copolymer, and the like. Among these, an acrylic resin is preferable.

A content ratio of the adhesive resin contained in the coating composition of the embodiment according to the present invention is preferably in a range from 10 to 200 parts by mass, more preferably from 10 to 15 parts by mass, and further preferably from 20 to 100 parts by mass based on 100 parts by mass of the antiviral agent against a non-enveloped virus.

The coating composition of the embodiment according to the present invention may include additives such as a dispersant, a viscosity modifier, an antifoaming agent, a colorant, a fragrance, and a preservative.

A content ratio of the antiviral agent against a non-enveloped virus included in the coating composition of the embodiment according to the present invention is preferably in a range from 0.5% to 50% by mass, more preferably from 1% to 40% by mass, and further preferably from 1% to 30% by mass from a viewpoint of efficient inactivation of a non-enveloped virus in the antiviral product to be obtained.

A method for producing an antiviral product in which the antiviral agent against a non-enveloped virus is impregnated to a surface of a base material using the coating composition of the embodiment according to the present invention will be described.

A method for producing such an antiviral product includes a step of applying a coating composition to a base material to form a coat (hereinafter, referred to as "coating step") and a step of drying the coat formed (hereinafter, referred to as "drying step").

The base material is not particularly limited, and may be an article containing an inorganic material, an organic material, or a material combining these materials. The shape thereof is not particularly limited. Examples of the base material include resin molded products including foamed resin molded products such as films, granules, and general molded products; fibers; fiber products such as non-woven fabrics and woven fabrics containing fibers; and the like.

In the coating step, padding, dipping, coating, spraying, printing, and the like can be applied. In the coating step, single-layer coating or multi-layer coating may be performed depending on the shape of the base material and the like.

In the drying step, closed heating, warm air heating, or the like is applied depending on the shape of the base material and the like, and a medium is removed from the coat to form a film containing the antiviral agent against a non-enveloped virus. This makes it possible to obtain an antiviral product having the film on the surface of the base material.

The antiviral product against a non-enveloped virus of the embodiment according to the present invention is a product including at least one selected from a group consisting of the compounds (A), (B) and (C).

As described above, those obtained using the coating composition and molded products obtained by subjecting a resin composition including the antiviral agent against a non-enveloped virus and a resin or its precursor to publicly known molding processing methods are preferable examples of the antiviral product against a non-enveloped virus. The latter resin composition may be either a thermoplastic resin composition or a curable resin composition. When a part of the antiviral agent against a non-enveloped virus is exposed in the obtained resin molded product, an inactivating effect of the non-enveloped virus is excellent.

The present invention is useful in the fields of industry, cleaning, medicine, food and the like. Specific examples of the antiviral product against a non-enveloped virus include films (such as wrapping film, decorative film, packaging bag, and the like), papers (such as wallpaper, seal paper, and the like), filters (such as air purifier filter, air conditioner filter, and the like), masks, gloves, stationery, tableware, cooking utensils, trays, shelves, doors, fences, handrails, desks, chairs, sofas, brushes, clothing, sports goods, hanging straps, housings for electrical products, and the like.

EXAMPLES

Hereinafter, embodiments of the present invention will be described in more detail with reference to Examples, but the present invention is not limited to these Examples.

1. Antiviral agent against a non-enveloped virus

Antiviral agents V1 to V6 consisting of the following components were used.

(1) V1 A powder of calcined hydrotalcite (composite oxide represented by chemical formula: $Mg_7Al_3O_{11.5}$), having a particle size of 0.1 to 30 $\mu$m by laser diffraction type particle size distribution meter.

(2) V2 A powder of sodium silicate (silicate represented by chemical formula: $Na_2Si_2O_5$), having a particle size of 0.1 to 30 $\mu$m by laser diffraction type particle size distribution meter.

(3) V3 A powder of calcium hydroxide, having a particle size of 0.1 to 30 $\mu$m by laser diffraction type particle size distribution meter.

(4) V4 A mica powder having a particle size of 0.1 to 30 $\mu$m by laser diffraction type particle size distribution meter.

(5) V5 A powder of MFI type zeolite (Na type), having a particle size of 0.1 to 30 $\mu$m by laser diffraction type particle size distribution meter.

(6) V6 A powder of MFItype zeolite (H type), having a particle size of 0.1 to 30 $\mu$m by laser diffraction type particle size distribution meter.

2. Evaluation of antiviral agent against a non-enveloped virus

Examples 1 to 3 and Comparative Examples 1 to 3

The performance of each of the above antiviral agents was evaluated by applying methods shown in JIS L 1922 (antiviral property test method of fiber product), and an antiviral activity value (Mv) obtained was used to determine the antiviral property. According to JIS L 1922, it is classified that the effect is exhibited in a case of $3>Mv\geq2.0$, and a sufficient effect is exhibited in a case of $Mv\geq3.0$.

Purified water was added to the antiviral agent so that its concentration was 0.1% by mass. Next, 100 $\mu$L of feline calicivirus solution having a virus infectivity of 1 to $5 \times 10^7$ PFU/mL was added to 900 $\mu$L of the above liquid, and a mixed liquid was allowed to stand at a temperature of 25°C for 2 hours. Thereafter, the mixed liquid was recovered, and the recovered liquid was subjected to a plaque count measurement method to measure the virus infectivity. The virus infectivity was measured in the same manner as the test sample except that 900 μL of phosphate buffered saline (PBS) was used as a control sample instead of the test sample.

The performance of the antiviral agent was evaluated by the antiviral activity value (Mv) obtained by the following formula. The results are shown in Table 1.

$$Mv = \text{Log (virus infectivity of control sample)} - \text{Log (virus infectivity of test sample)}$$

Table 1

|  |  | Antiviral agent | Antiviral activity value Mv |
|---|---|---|---|
| Example 1 | V1: | Calcined hydrotalcite | 2.5 |
| Example 2 | V2: | Sodium silicate | 3.2 |
| Example 3 | V3: | Calcium hydroxide | 4.2 |
| Comparative example 1 | V4: | Mica | 0.4 |
| Comparative example 2 | V5: | MFI type zeolite (Na type) | 0.3 |
| Comparative example 3 | V6: | MFI type zeolite (H type) | 0.3 |

As is clear from results in Table 1, Examples 1, 2, and 3 using the antiviral agents V1, V2 and V3 showed excellent antiviral properties.

3. Production of antiviral product against a non-enveloped virus

Example 4

The antiviral agent V1 and a binder containing an acrylic resin as an adhesive resin and water as a medium are mixed so that a mass ratio of the antiviral agent and the adhesive resin was 1:1 to prepare a coating composition. Subsequently, a polyester fabric having a basis weight of 25 g/m$^2$ was dipped in this coating composition. After that, the coated fabric was dried at a temperature of 130°C to produce an antiviral processed fabric in which an impregnation amount of the antiviral agent V1 was 3 g/m$^2$.

Example 5

An antiviral processed fabric was produced in the same manner as those in Example 4 except that the antiviral agent V2 was used instead of the antiviral agent V1.

Example 6

An antiviral processed fabric was produced in the same manner as those in Example 4 except that the antiviral agent V3 was used instead of the antiviral agent V1.

INDUSTRIAL APPLICABILITY

In the present invention, the antiviral agent against a non-enveloped virus and the antiviral product against a non-enveloped virus containing the antiviral agent against a non-enveloped virus are suitable for inactivating the non-enveloped virus such as norovirus, and are useful in the fields of industry, cleaning, medicine, food and the like.

The antiviral agent against a non-enveloped virus not only can be used as a raw material for producing the antiviral product against a non-enveloped virus, but also can inactivate a virus already attached to an article by being brought into contact with the virus.

**Claims**

1.    An antiviral agent against a non-enveloped virus, comprising at least one selected from a group consisting of:

(A) a compound containing A1 element, Mg element, and O element;
(B) a compound containing an alkali metal element or an alkaline earth metal element, Si element, and O element; and
(C) a hydroxide containing a divalent metal element.

2. The antiviral agent against a non-enveloped virus according to claim 1, wherein the compound (A) is a compound represented by a following formula (1).

$$Mg_xAl_yO_{(x+1.5y)} \qquad (1)$$

(in the formula, x and y are integers.)

3. The antiviral agent against a non-enveloped virus according to claim 1 or 2, wherein the compound (B) is a silicate.

4. The antiviral agent against a non-enveloped virus according to any one of claims 1 to 3, wherein the hydroxide (C) is a compound containing an alkaline earth metal element.

5. An antiviral product comprising the antiviral agent against a non-enveloped virus according to any one of claims 1 to 4.

6. A coating composition comprising the antiviral agent against a non-enveloped virus according to any one of claims 1 to 4 and an adhesive resin.

7. A production method of an antiviral product, comprising:

a step in which the coating composition according to claim 6 and a base material are used to form a coat on a surface of the base material, and
a step in which the coat is dried.

## INTERNATIONAL SEARCH REPORT

| | International application No. |
|---|---|
| | PCT/JP2019/042926 |

**A.   CLASSIFICATION OF SUBJECT MATTER**
Int.Cl. A01N59/06(2006.01)i, A01N25/04(2006.01)i, A01N59/00(2006.01)i,
A01P1/00(2006.01)i, C09D5/14(2006.01)i, C09D7/61(2018.01)i,
C09D201/00(2006.01)i, D06M11/44(2006.01)i, D06M11/45(2006.01)i,
D06M11/79(2006.01)i
FI: A01N59/06Z, A01N25/04103, A01N59/00C, A01P1/00, C09D5/14, C09D7/61,
C09D201/00, D06M11/44, D06M11/45, D06M11/79
According to International Patent Classification (IPC) or to both national classification and IPC

**B.   FIELDS SEARCHED**

Minimum documentation searched (classification system followed by classification symbols)
Int.Cl. A01N59/06, A01N25/04, A01N59/00, A01P1/00, C09D5/14, C09D7/61,
C09D201/00, D06M11/44, D06M11/45, D06M11/79

Documentation searched other than minimum documentation to the extent that such documents are included in the fields searched
Published examined utility model applications of Japan      1922–1996
Published unexamined utility model applications of Japan      1971–2020
Registered utility model specifications of Japan      1996–2020
Published registered utility model applications of Japan      1994–2020

Electronic data base consulted during the international search (name of data base and, where practicable, search terms used)
CAplus/REGISTRY(STN)

**C.   DOCUMENTS CONSIDERED TO BE RELEVANT**

| Category* | Citation of document, with indication, where appropriate, of the relevant passages | Relevant to claim No. |
|---|---|---|
| X<br>A | JP 2018-172844 A (NIPPON PAPER INDUSTRIES CO., LTD.)<br>08 November 2018, claims, paragraphs [0012], [0047],<br>[0080]-[0085] | 1, 5-7<br>2-4 |
| X<br>A | JP 2017-119658 A (JDC CORPORATION) 06 July 2017,<br>paragraphs [0022], [0041], [0050]-[0062],<br>[0080]-[0091] | 1, 5-7<br>2-4 |
| X<br>A | WO 2014/115860 A1 (OSAKA PREFECTURE UNIVERSITY) 31 July<br>2014, paragraphs [0020], [0027]-[0037] | 1, 3, 5-7<br>2, 4 |
| X<br>A | JP 2009-526828 A (QUEEN MARY & WESTFIELD COLLEGE) 23<br>July 2009, claims, paragraph [0042] | 1, 3, 5-7<br>2, 4 |

☒ Further documents are listed in the continuation of Box C.   ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09.01.2020 | 28.01.2020 |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
|---|---|

Form PCT/ISA/210 (second sheet) (January 2015)

**INTERNATIONAL SEARCH REPORT**

International application No.

PCT/JP2019/042926

C (Continuation).   DOCUMENTS CONSIDERED TO BE RELEVANT

| Category* | Citation of document, with indication, where appropriate, of the relevant passages | Relevant to claim No. |
|---|---|---|
| X<br>A | WO 2011/058964 A1 (KAWAKAMI CO., LTD.) 19 May 2011, claims, paragraphs [0018], [0019] | 1, 4-7<br>2-3 |

Form PCT/ISA/210 (second sheet) (January 2015)

| | | |
|---|---|---|
| **INTERNATIONAL SEARCH REPORT** | | International application No. |
| Information on patent family members | | PCT/JP2019/042926 |

| JP 2018-172844 A | 08 November 2018 | US 2019/0282472 A1 |
|---|---|---|
| | | claims, paragraphs [0035], [0074], [0126]-[0130] |
| | | WO 2018/030521 A1 |
| | | EP 3498674 A1 |
| | | CN 109562953 A |
| | | KR 10-2019-0039989 A |
| JP 2017-119658 A | 06 July 2017 | (Family: none) |
| WO 2014/115860 A1 | 31 July 2014 | (Family: none) |
| JP 2009-526828 A | 23 July 2009 | US 2010/0040655 A1 |
| | | claims, paragraph [0051] |
| | | WO 2007/093808 A2 |
| | | EP 1991209 A |
| | | KR 10-2009-0003230 A |
| | | CN 101453995 A |
| WO 2011/058964 A1 | 19 May 2011 | US 2012/0231143 A1 |
| | | claims, paragraphs [0039], [0040] |
| | | EP 2499915 A1 |
| | | CN 102612320 A |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 201830521 A
- WO 201786098 A
- JP 2015078132 A